(19) Europäisches Patentamt
European Patent Office
Office européen des brevets

(11) EP 0 553 495 B1

(12) **EUROPEAN PATENT SPECIFICATION**

(45) Date of publication and mention
of the grant of the patent:
**18.02.1998 Bulletin 1998/08**

(51) Int Cl.6: **C08L 67/06**
// (C08L67/06, 75:04)

(21) Application number: **92122096.8**

(22) Date of filing: **29.12.1992**

(54) **Pigmented unsaturated polyester-based molding compositions**

Pigmentierte Formmassen auf der Basis ungesättigter Polyester

Compositions à mouler pigmentées à base de polyester insaturé.

(84) Designated Contracting States:
**AT BE CH DE DK ES FR GB GR IE IT LI LU MC NL PT SE**

(30) Priority: **31.12.1991 US 815255**

(43) Date of publication of application:
**04.08.1993 Bulletin 1993/31**

(73) Proprietor: **UNION CARBIDE CHEMICALS & PLASTICS TECHNOLOGY CORPORATION Danbury, Connecticut 06817-0001 (US)**

(72) Inventors:
• **Rex, Gary Charles Cross Lanes, West Virginia 25313 (US)**
• **Atkins, Kenneth Earl South Charleston, West Virginia 25303 (US)**
• **Gerkin, Richard Michael Cross Lanes, West Virginia 25313 (US)**

(74) Representative: **Barz, Peter, Dr. Patentanwalt Kaiserplatz 2 80803 München (DE)**

(56) References cited:
**EP-A- 0 074 746        EP-A- 0 247 429**

**Description**

This application relates to reinforced thermosetting polyester compositions, and more particularly, to the improvement of pigmentability in such compositions.

Reinforced thermosetting polyester-based molding compositions in the form of sheet molding compound (SMC) and bulk molding compound (BMC) have been known for many years. These materials are based on unsaturated polyester resins produced from a reaction between a polyol having at least 2 hydroxyl groups, and a mixture of saturated and unsaturated dicarboxylic acids (or their anhydrides). The initially formed unsaturated polyester resin is blended with one or more monomers capable of crosslinking with the unsaturated in the polyester, a peroxide catalyst, and a reinforcing material such as fiberglass, then heated to decompose the peroxide and cause the crosslinking reaction between the monomer and the unsaturation in the polyester molecule to occur. The resulting product is a composite of the reinforcing material and the crosslinked polyester.

For many applications, an alkaline earth-containing thickener such as magnesium oxide is added to the composition before crosslinking is initiated. This is thought to complex with residual carboxyl groups of the polyester molecules, thereby increasing the viscosity of the mixture and aiding achievement of uniform distribution of reinforcing filler as the mixture is caused to flow into its final shape during processing. In addition to the materials mentioned thus far, the molding compositions also frequently contain various other fillers, mold release agent, and other additives to be discussed below.

A great variety of properties may be achieved in the cured composite by appropriate selection of the identities and amounts of the starting diacids, polyols, crosslinking monomers, catalysts, other additives, etc. used in the preparation. As a result, these materials have wide applicability in the manufacture of strong relatively light weight plastic parts.

Historically, molding composite materials based on thermosetting polyester resins suffered from the difficulties that 1) the surfaces of molded parts were poor, and included fiber patterns which required costly sanding operations for painted applications and precluded use of such materials in high appearance internally pigmented applications; 2) parts could not be molded to close tolerances because of warpage; 3) molded parts contained internal cracks and voids, particularly in thick sections; and 4) molded parts had notable depressions or "sinks" on surfaces opposite reinforcing ribs and bosses.

The cause of these problems was believed to be a high degree of shrinkage during copolymerization of the unsaturated polyester resin with the crosslinking monomer. Such shrinkage during the crosslinking reaction causes the polymer to pull away from the surfaces of the mold and the fiberous reinforcements. This reduces accuracy of mold surface reproduction and leaves fiber patterns at the surface of the molded parts. The stresses created by nonuniform shrinkage cause warpage, internal cracks, and poor reproduction of mold dimensions in finished molded parts. It has been shown that curing of typical unsaturated polyester resin results in volumetric shrinkage of approximately 7%.

The above-discussed difficulties have been addressed in practice by adding certain thermoplastic materials to the molding composite. The presence of these thermoplastics in the composition reduces shrinkage of the part during cure, or in some cases causes a small amount of expansion, thereby providing molded parts which more accurately reflect the molds in which they were made, and which have relatively smooth surfaces.

The surface smoothness of a molded part is gauged by measuring its surface profile by means of a suitable surface analyzer. A rough surface exhibits a high surface profile, while a smooth surface exhibits a low surface profile. As the addition of thermoplastic materials to the polyester-based molding composite results in smoother surfaces in the molded part, relative to the case without such thermoplastic materials present, these thermoplastics are called "low profile additives".

A number of thermoplastics have been found to give varying levels of shrinkage control. Examples are:

a) poly(vinyl acetates). See, for example, US Patents 3,718,714; 4,284,736; 4,288,571; and 3,842,142.
b) polymethylmethacrylates and copolymers with other acrylates. See, for example, US Patents 3,701,748; 3,722,241; 4,463,158; 4,020,036; and 4,161,471.
c) copolymers of vinyl chloride and vinyl acetate. See, for example, US Patents 4,284,736 and 3,721,642.
d) polyurethanes. See, for example, US Patents 4,035,439; 4,463,158, and 4,421,894; British Patent 1,451,737; Japanese patent publication 47/19696 and patent application 52/141891; and European Patent applications 0,254,186 (1988), 0,074,746 (1983) and EP-A-0 247 429. European patent application 0,074,746 discloses use of a polyurethane oligomer in conventional thermosetting polyester resin formulations, the polyurethane being prepared by reaction of an organic polyisocyanate with a polyester or polyether polyol to form a hydroxyl-terminated prepolymer, then reacting this with a dicarboxylic acid anhydride. The reference states that in forming the polyurethane prepolymer other ingredients such as chain extenders, for example, ethylene glycol, butane diol, hexane diol, propylene glycol, etc., may be included in the reaction mixture, and also that the final thermosetting polyester resin compositions may contain a variety of additives, including pigments. However, no examples of polyurethane additives which include chain extenders are presented. These polyurethane LP-additives which include chain extenders are exemplified in EP-A-0 247 429. The compositions therein described may be pigmented but the application fails to describe compositions which comprise both a pigment and a thickener.

e) styrene-butadiene copolymers and other elastomers. See, for example, US Patents 4,042,036; 4,161,471; and 4,160,759.

f) polystyrene and certain copolymers of certain monomers. See, for example, US Patents 3,503,921 and 3,674,893; Netherlands Patent 70-15386; and German Patent 2,252,972.

g) polycaprolactones. See, for example, US Patents 3,549,586 and 3,688,178.

h) cellulose acetate butyrate. See, for example, US Patent 3,642,672.

i) saturated polyesters and various blends of saturated polyesters with poly(vinyl chloride). See, for example, US Patents 3,489,707; 3,736,728; and 4,263,199; Japanese Patent 4,601,783; and Netherlands Patent 70-14568.

These polymers, when blended in appropriate ratios with unsaturated polyester resins and comonomers result in shrinkage control under both standard compression and injection molding conditions. For optimum shrinkage control and hence mold reproduction in particular systems, the combinations of structures and molecular weights of the unsaturated polyester resin and the thermoplastic low profile additive are selected on the basis of molding trials.

A wide variety of unsaturated polyester resin structures has been reported in the literature. The most commonly used polyester resins, however, are those based on the condensation of 1.0 mole of maleic anhydride with a slight excess of propylene glycol, and similar resins in which up to 0.35 moles of the maleic anhydride is replaced with orthophthalic anhydride or isophthalic acid. The comonomer is almost always styrene.

This approach to shrinkage control can also be applied in the case of vinyl ester resins. See for example, US Patent 3,674,893.

Progress in overcoming the above-discussed problems of shrinkage of molded polyester-based composite material during cure has occurred in stages over approximately the past twenty-five years. The successive improvements have been quantified by determining the linear shrinkage of parts and/or measuring their surface smoothness.

The first generation of low profile additives were materials such as polystyrene and polyethylene. Molded parts incorporating such additives were found to exhibit shrinkage of about 2 mils per inch (0.2%), in contrast to shrinkages of 4 to 5 mils per inch (0.4-0.5%) found for composites lacking these additives. The resulting composites were found to accept internal pigments well, but the surface quality of the parts was poor and the degree of shrinkage, although improved relative to that of composites containing no low profile additive, was still objectionably high for many applications.

The second generation of low profile additives were acrylic-based polymers such as polymethylmethacrylate, which when employed with specific unsaturated polyester resins prepared by condensation of maleic anhydride with propylene glycol, gave composite materials which exhibited shrinkage of about 0.5 mils per inch (0.05%). These materials were found to have poor pigmentability and poor surface smoothness by current standards.

The third generation of low profile additives were the poly(vinyl acetate) polymers. Such additives can be used in a wide range of unsaturated polyester resin materials, and the molded parts exhibit essentially no shrinkage. Compositions containing poly(vinyl acetate) low profile additives have poor pigmentability, but the molded parts have very good dimensional stability and surface smoothness. As a result, these materials are widely used.

The fourth generation of low profile additives are materials which cause unsaturated polyester resin composite materials containing them to tend to expand slightly during cure, thereby reproducing the surface of the mold with great accuracy. At room temperature, products made with these additives generally are 0.3 to 0.4 mils per inch (0.03 - 0.04 %) larger than the room temperature dimensions of the mold. The surface smoothness of parts made with these low profile additives equals or exceeds the smoothness of automotive grade steel. However, pigmentability of compositions made with these additives is poor.

There are several varieties of fourth generation of low profile additives:

1) a poly(vinyl acetate) or other thermoplastic polymer, plus at least one shrinkage control "synergist". Examples of shrinkage control synergists are a) epoxide-containing materials such as epoxidized octyl tallate, b) secondary monomers such as vinyl acetate monomer, which are more reactive with themselves than with styrene, c) mixtures of such epoxides and secondary monomers, d) lactones such as caprolactone, e) siloxane-alkylene oxide polymers, and f) fatty acid esters.

2) certain modified poly(vinyl acetate) polymers which are employed with specially selected unsaturated polyester resins.

3) a standard low profile additive such as poly(vinyl acetate), preferably acid-containing, plus an isocyanate prepolymer resulting from reaction of a polyether polyol and a diisocyanate, which provides a dual thickening mechanism.

Low profile additives which afford a high degree of shrinkage control, poly(vinyl acetate)s and polyurethanes for example, are believed to be chemically incompatible with the cured polyester, leading to phase separation. This phase separation results in a stark white appearance in unpigmented molded parts, and this in turn results in hazing in pigmented molded parts.

Nonuniformities in the white appearance of nonpigmented molded parts containing chemically incompatible low profile additives are referred to as mottling. Mottling and hazing are generally not considered a problem with unpigmented molded parts, since these are generally painted. However, in internally pigmented parts mottling results in nonuniform pigmentation. Low profile additives which impart a high degree of shrinkage control generally show such severe pigment mottling that their use in pigmented applications is precluded. The problems of pigment mottling and hazing have generally restricted the use of so-called "zero shrinkage" low profile additives to unpigmented parts.

By contrast, molding compositions containing low profile additives such as polystyrene or polyethylene, which are more compatible with crosslinked unsaturated polyesters, exhibit reduced phase separation and consequently little haziness or mottling, and hence are readily pigmentable. However, as indicated above, such low profile additive materials give poor shrinkage control and molded parts containing them have generally poor surface quality. These facts have given rise to the industry truism "the better the shrinkage control, the poorer the pigmentability."

The fiberglass reinforced plastics industry has a great need for molding compositions exhibiting both substantially zero shrinkage upon curing, and very good to excellent pigmentability. Such compositions are the subject of the present application.

The present invention provides polyester-based molding compositions having an unusual combination of excellent shrinkage control and pigmentability.

The polyester-based molding compositions of the invention include (a) an unsaturated polyester; (b) an ethylenically unsaturated monomer which is copolymerizable with the unsaturated polyester; (c) a polyurethane low profile additive which comprises the reaction product of (i) a polyisocyanate, (ii) a polyol or polyol blend having an average functionality of 2 to 3 hydroxyl groups per molecule and an average molecular weight of at least 500, and (iii) a diol chain extender having a molecular weight of less than 500; (d) fiber reinforcement; (e) a chemical thickener; (f) a pigment; and (g) a polymerization catalyst.

A method of preparing thermoset polyester compositions comprises the steps of mixing the ingredients of the polyester-based molding composition described above, forming the resulting mixture into a desired shape, and heating the shaped composition to cure it.

A pigmented thermoset polyester-based article made using the composition and process of the invention is also considered within the scope of the present invention.

The polyisocyanates employed in the polyurethane low profile additives are any of the polyisocyanates known to the art as appropriate for use in the preparation of polyurethane materials. Examples of such polyisocyanates are materials such as tetramethylene diisocyanate, hexamethylene diisocyanate, 1,4-cyclohexane diisocyanate, 1,3-cyclohexane diisocyanate, xylene diisocyanate, isophorone diisocyanate (IPDI), 4,4'-diphenylmethane diisocyanate, 2,4-toluene diisocyanate, 2,6-toluene diisocyanate, and straight or branched urethane polymers containing multiple isocyanate substituent groups, these polymers being synthesized from a simple polyisocyanate and at least one polyol having at least two active hydrogen atoms. Examples of the latter materials are isocyanate-containing prepolymers prepared by reaction of a toluene diisocyanate (TDI), or a methylenediphenylene diisocyanate (MDI) or polymeric form thereof (polymeric MDI), with a polyalkylene oxide diol such as polypropylene oxide diol. Materials having three isocyanate groups may also be employed.

Preferred polyisocyanates are materials such as 2,4-toluene diisocyanate, 2,6-toluene diisocyanate, mixtures thereof, 4,4'-diphenylmethane diisocyanate and isomers thereof, and isophorone diisocyanate (IPDI).

Polyisocyanates suitable for use in polyurethane manufacture are exemplified and discussed in Frisch, K.C., "Fundamental Chemistry and Catalysis of Polyurethanes," Polyurethane Technology, Paul F. Bruins, Ed., Interscience Publishers, 1969.

The polyols which may be employed in synthesizing the polyurethane low profile additives are any of the polyols known to the art as useful for the synthesis of polyurethane materials such as polyether polyols, polyester polyols (including those derived from polylactones), and hydroxyl group-containing vinyl polymers, polyester polyols being preferred. In these materials primary hydroxyl groups are preferred. Mixtures of these materials may also be employed. The average functionality of the polyol or polyol blend is in the range of 2 to 3 hydroxyl groups per molecule. Preferably, polyol blends include some triol. The average molecular weight of the polyol or polyol blend is in the range from 500 to 10,000. Preferably, the average molecular weight will be in the range 1000 to 3000.

Examples of polyols which are suitable for preparation of the polyurethane low profile additives are materials such as: (1) hydroxyl-containing vinyl-based polymers such as copolymers of vinyl acetate or other vinyl esters with hydroxyl containing unsaturated monomers, terpolymers of vinyl chloride and vinyl acetate (or other vinyl esters) with hydroxyl containing unsaturated monomers, and also, hydrolyzed versions of vinyl ester containing polymers; (2) polyester polyols, diols, and triols, such as those based on the condensation products of polycarboxylic acids and polyols, preferably those of dicarboxylic acids or anhydrides (preferably those having three or more carbon atoms) and diols (preferably those having two or more carbon atoms) with or without some triol; these are preferred materials, examples of which are the reaction products (a) of adipic acid and diethylene glycol, (b) of ethylene glycol and butylene glycols mixtures with adipic acid, (c) of ethylene glycol with adipic acid, (d) of butylene glycol with adipic acid, (e) of hexanediol with adipic acid, (f) of neopentyl glycol with adipic acid, (g) of propylene glycol with adipic acid, (h) of mixtures of adipic acid and isophthalic acid with such glycols as diethylene glycol or hexanediol or mixtures of hexanediol and ethylene glycol, (i) of adipic acid with mixtures of diethylene glycol and glycerine; (3) lactone polyols, particularly those obtained from the polymerization of ε-caprolactone; (4) modified polyester polyol prepared by reaction of ε-caprolactone, diacid, and diol; (5) polyether polyols, diols, and triols, such as polypropylene oxide and ethylene oxide capped PPO (which yields primary hydroxyls); and (6) amine-terminated polyols such as amino terminated polypropylene oxide or polypropylene oxide/polyethylene oxide polyethers. These and other such materials are prepared in the manner well known to the art.

Polyols suitable for synthesis of polyurethanes are discussed and exemplified in Frisch, K.C., "Fundamental Chemistry and Catalysis of Polyurethanes," Polyurethane Technology, Paul F. Bruins, Ed., Interscience Publishers, 1969.

The diol chain extenders which are suitable for preparing the polyurethane low profile additives are different from the polyols discussed above. They have molecular weights lower than 500, generally in the range of 62 to less than 500, and generally contain between 2 and 32 carbon atoms.

Examples of low molecular weight diol chain extenders which may be employed in synthesizing the polyurethane low profile additives of the invention are neopentyl glycol, 1,4-butanediol and other butanediol isomers, 1,6-hexanediol and other hexanediol isomers, ethylene glycol, 1,3-propylene glycol and 1,2-propylene glycol, isomers of cyclohexane dimethanol, 1,6-octanediol and other octanediol isomers, diethylene glycol, and dipropylene glycol. Preferred materials are the aliphatic, linear, primary diols. These materials are either commercially available or may be readily prepared by methods well known to those skilled in the art.

The polyurethane low profile additives are synthesized by reacting the polyisocyanate, the polyol or blend of polyols, and the diol chain extender in the presence of a catalyst in the manner known to the art. In the reaction, the polyol and diol chain extender, considered together, are employed in a slight molar excess relative to the polyisocyanate. The diol chain extender typically constitutes between 20 and 80 percent of the sum of the polyol and diol chain extender on a molar basis. Preferably, the diol chain extender constitutes 40 to 60 percent of the sum of polyol and diol chain extender on a molar basis. Considered from another vantage point, residues of the diol chain extender will generally constitute between 1 and 25 percent by weight, preferably 4 to 7 percent by weight, of the product polyurethane.

The preparation of polyurethanes is discussed in Frisch, K.C., "Fundamental Chemistry and Catalysis of Polyurethanes," Polyurethane Technology, Paul F. Bruins, Ed., Interscience Publishers, 1969.

It is often desirable to have carboxyl functionalities on low profile additives to allow them to enter the chemical thickening reaction of certain bulk molding compound (BMC) and all sheet molding compound (SMC) formulations. This can be achieved by reacting all or a portion of the excess hydroxyl groups referred to above with dicarboxylic acid anhydride to form an ester and a carboxyl moiety. Examples of such anhydrides are phthalic anhydride, succinic anhydride, methyl succinic anhydride, maleic anhydride and trimellitic anhydride. Carboxyl groups can also be introduced into the polyurethane polymers by the use of carboxy containing diols such as dimethylol propionic acid as a portion of the polyol/diol materials in the reaction with polyisocyanate.

In the molding compositions of the invention, the unsaturated polyester is any of those known to the art. Each is the reaction product of a polyol and at least one olefinically unsaturated dicarboxylic acid or anhydride, and may also include residues of saturated and/or aromatic dicarboxylic acids or anhydrides. The olefinic unsaturation is preferably in the β position relative to at least one of the carbonyl groups of the dicarboxylic acid or anhydride. The unsaturated polyester typically has a molecular weight in the range of 1,000 to 2,000, and contains residual carboxyl and hydroxyl groups as well as olefinic unsaturation.

Examples of suitable unsaturated dicarboxylic acids and anhydrides useful in preparation of the polyesters are materials such as maleic acid or anhydride, fumaric acid, tetrahydrophthalic acid or anhydride, hexachloroendomethylene tetrahydrophthalic anhydride ("chlorendic anhydride"), itaconic acid, citraconic acid, mesaconic acid, and Diels Alder adducts of maleic acid or anhydride with compounds having conjugated olefinic unsaturation, such adducts being exemplified by bicyclo[2.2.1]hept-5-en3-2,3-dicarboxylic anhydride, methyl maleic acid, and itaconic acid. Maleic acid or anhydride and fumaric acid are the most widely used commercially.

Examples of saturated or aromatic dicarboxylic acids or anhydrides which may be used in the preparation of the polyesters are materials such as phthalic acid or anhydride, isophthalic acid, terephthalic acid, tetrahydrophthalic anhydride, hexahydrophthalic acid or anhydride, adipic acid, isophthalic acid, sebacic acid, succinic acid, and dimerized fatty acids.

Polyols useful in the preparation of the polyesters are materials such as ethylene glycol, diethylene glycol, triethylene glycol, propylene glycol, dipropylene glycol, tripropylene glycol, butylene glycols, neopentyl glycol, 1,3- and 1,4-butane diols, 1,5-pentane diol, 1,6-hexanediol, glycerol, 1,1,1- trimethylolpropane, bisphenol A, and hydrogenated bisphenol A. It is also possible to employ the corresponding oxides, such as ethylene oxide and propylene oxide, etc.

Generally no more than about 20% of the polyols employed in the preparation of a polyester are triols.

In addition to the above esters, one may also use dicyclopentadiene-modified unsaturated polyester resins described in U.S. Patents 3,986,922 and 3,883,612.

Another type of unsaturated polyester useful for preparation of polyester-based molding compositions is the group of materials known as vinyl esters. These are reaction products of saturated polyesters possessing secondary hydroxyl functionalities with vinyl group-containing acids or anhydrides such as acrylic acid or methacrylic acid. An example is the reaction product of an epoxy resin based on bis-phenol A with an unsaturated carboxylic acid such as methacrylic acid. Vinyl esters and their preparation are disclosed in US Patent 3,887,515.

The unsaturated polyester is generally employed in the molding composition at a level of between 20 and 50%, preferably 30% to 45%, by weight based on the weight of polyester, monomer, and low profile additive employed. In practice, it is usually employed as a 60-65% by weight solution in the olefinically-unsaturated monomer used for crosslinking.

Unsaturated polyester materials are exemplified and discussed in the following references: B. Parkyn, F. Lamb, and B.V. Clifton, "Polyesters", Vol, II, London Iliffe Books, LTD, 1967; J. Bjorksten, H. Tovey, "Polyesters and Their Applications", Reinhold Publishing Corp., 1960.

The olefinically unsaturated monomer employed in the molding composition of the invention is a material which is copolymerizable with the unsaturated ester to cause crosslinking which effects the curing of the polyester. The monomer also serves the function of dissolving the polyester, thereby facilitating its interaction with the other components of the composition. Sufficient monomer is employed to provide convenient processing, but a large excess beyond that required is to be avoided because too much monomer may have an adverse effect on properties of the final composite material.

The monomer is generally employed in the composition at a level of between 30 and 70%, preferably 40 to 55%, by weight based on the weight of polyester, monomer, and any low profile additive employed.

By far the most commonly employed olefinically unsaturated monomer is styrene, although other monomers such as vinyl toluene isomers, methyl methacrylate, acrylonitrile, and substituted styrenes like chlorostyrene and alpha-methyl styrene may also be employed. Others used alone or as mixtures with those monomers previously mentioned are multifunctional monomers such as divinylbenzene and di- and multi-functional acrylates and methacrylates.

In the molding compositions of the invention, the polyurethane low profile additive is a material as defined above and is generally employed at a level between 5 and 25 percent by weight, preferably 10 to 20 percent by weight, based on the unsaturated polyester resin, monomer, and low profile additive.

The fiber reinforcements employed in the molding compositions of the invention are any of those known to the art for use in polyester-based molding compositions. Examples of such materials are glass fibers or fabrics, carbon fibers and fabrics, asbestos fibers or fabrics, various organic fibers and fabrics such as those made of polypropylene or acrylonitrile/vinyl chloride copolymer. These reinforcing materials are typically employed in the molding compositions at a level of between 5 and 50 percent by weight, based on the total weight of the composition, and preferably 10 to 35 percent by weight.

The chemical thickeners employed in the molding compositions of the invention are any of those known to the art for use in polyester-based molding compositions. These materials include the oxides and hydroxides of the metals of Groups I, II, and III of the Periodic Table. Specific illustrative examples of thickening agents include magnesium oxide, calcium oxide, zinc oxide, barium oxide, calcium hydroxide, magnesium hydroxide, and mixtures thereof. The thickening agents are normally employed in proportions of from about 0.1 to about 6 percent by weight, based on the total weight of the polyester resin, monomer, and low profile additive.

In addition to the above-discussed ingredients, the polyester-based molding compositions of the present invention also contain pigment, since mottling and hazing are not problems as they are with pigmented molding compositions of the prior art which contain highly effective shrinkage control agents. The amount of pigment may vary widely, depending on the particular molding composition and pigment used. It is typically employed in the range of about 5 to about 30 pph of resin.

Polymerization initiators such as t-butyl hydroperoxide, t-butyl perbenzoate, benzoyl peroxide, t-butyl peroctoate, cumene hydroperoxide, methyl ethyl ketone peroxide and peroxy ketals, to catalyze the reaction between the olefinically unsaturated monomer and the olefinically unsaturated polyester are also included in the compositions of the invention. The polymerization initiator is employed in a catalytically effective amount, such as from about 0.3 to about 2 to 3 weight percent, based on the total weight of the polyester, monomer, and low profile additive.

The molding compositions of the invention may also contain one or more conventional additives, which are employed for their known purposes in the usual amounts. The following are illustrative of such additives:

1. Fillers such as clay, alumina trihydrate, silica and calcium carbonate;
2. Mold release agents or lubricants, such as zinc stearate and calcium stearate; and
3. Rubbers or elastomers such as: a) homopolymers or copolymers of conjugated dienes containing from 4 to 12 carbon atoms per molecule (such as 1,3-butadiene and isoprene), the polymers having a weight average molecular weight of 30,000 to 400,000 or higher, as described in US Patent 4,020,036; b) epihalohydrin homopolymers, copolymers of two or more epihalohydrin monomers, or a copolymer of an epihalohydrin monomer(s) with an oxide monomer(s) having a number average molecular weight ($M_n$) which varies from 800 to 50,000 as described in US Patent 4,101,604; c) chloroprene polymers including homopolymers of chloroprene and copolymers of chloroprene with sulfur and/or with at least one copolymerizable organic monomer wherein chloroprene constitutes at least 50 weight percent of the organic monomer make-up of the copolymer, as described in US Patent 4,161,471; d) hydrocarbon polymers including ethylene/propylene dipolymers and copolymers of ethylene/propylene and at least one nonconjugated diene, such as ethylene/propylene/hexadiene terpolymers and ethylene/propylene/1,4-hexadiene/norbornadiene, as described in US Patent 4,161,471; e) conjugated diene butyl elastomers, such as copolymers consisting of from 85 to 99.5 percent by weight of a $C_4$-$C_7$ olefin combined with 15 to 0.5 percent by weight of a conjugated multi-olefin having 4 to 14 carbon atoms, and copolymers of isobutylene and isoprene where a major portion of the isoprene units combined therein have conjugated diene unsaturation, as described in US Patent 4,160,759.

In the process for preparing thermoset polyester compositions, wherein the molding composition as described above is prepared, formed into a desired shape, and cured, the polymerization initiator is a material such as t-butyl perbenzoate, benzoyl peroxide, t-butyl peroctoate, diacetyl peroxide, t-butyl hydroperoxide, cumene hydroperoxide, or a peroxy ketal. The initiator is employed at a level typically between 1 and 2 percent by weight of the unsaturated polyester, monomer, and low profile additive.

Preparation of the Molding Compositions

The compositions of the invention are prepared by mixing the components in a suitable apparatus such as a Hobart mixer, or a Cowles blade high shear mixer (except for the fiberglass), at temperatures on the order of about 20°C to about 50°C. The components may be combined in any convenient order. Generally, it is preferable that the thermosetting resin and the low profile additive are added in liquid form by preparing a solution of these materials in styrene or some other liquid copolymerizerable monomer. All the liquid components are usually mixed together before adding fillers and the thickening agent. The fiberglass is added after the thickening agent. Once formulated and matured (if desirable), the compositions can be molded into thermoset articles of desired shape, particularly thermoset articles such as automobile body parts. The actual molding cycle will depend upon the particular composition being molded as well as upon the nature of the cured product desired. Suitable molding cycles are conducted on the order of about 100°C to about 185°C for periods of time ranging from about 0.5 minutes to about 5 minutes. This depends on the particular catalyst employed.

GLOSSARY

As employed in this application, the following terms have the meanings shown below.

BMC stands for bulk molding composition.

CM-2015 is a 35% carbon black pigment dispersion available from Plasticolors, Inc.

Fomrez UL-1 is dibutyl di(lauryl mercapto) tin, a commercial product of Witco Chemical Corporation.

LP-40A is a proprietary carboxylated poly(vinyl acetate) manufactured and sold by Union Carbide Chemicals and Plastics Company, Inc.

LPA refers to low profile additive.

MA refers to maleic anhydride.

MR 13031 is an unsaturated polyester containing some orthophthalic acid moieties, available from Aristech Chemical Corporation.

Neulon T+ is a proprietary carboxylated poly(vinyl acetate) manufactured and sold by Union Carbide Chemicals and Plastics Company, Inc.

Omyacarb 5 is a calcium carbonate of 5 micron particle size, available from Omya Corporation.

P-276 is a fiber glass reinforcement available from Vetrotex International.

PA stands for phthalic anhydride.

PG-9033 is a proprietary magnesium oxide dispersion in a low molecular weight unsaturated polyester carrier resin, available from Plasticolors Inc.

Polyol A is a polyester polyol produced from the reaction of a mixture of 80% diethylene glycol/adipic acid copolymer and 20% ε-caprolactone.

Polyol B is a polyester polyol produced by reaction of a mixture of 20% diethylene glycol/adipic acid copolymer and 80% ε-caprolactone.

Polyol C is a polyester polyol produced by a reaction of a mixture containing 35% diethylene glycol/adipic acid copolymer and 65% ε-caprolactone.

Polyol D is a polyester polyol which is polycaprolactone initiated by diethylene glycol.

PULPA stands for polyurethane low profile additive.

Rucoflex F203 is a polyester triol which is a glycerine-started diethylene glycol/adipic acid polymer, available from the Ruco Chemical Company.

Rucoflex S1011-35 is a polyester polyol which is a diethylene glycol/adipic acid polymer, available from the Ruco Chemical Company.

SMC stands for sheet molding compound.

SWI stands for surface waviness index as measured by a Diffracto D-sight audit station produced and sold by Diffracto Ltd.

T-12® stands for dibutyltindilaurate, a product of M & T Chemical.

TDI stands for toluene diisocyanate. The usual 80:20 mixture of the 2,4- and 2,6- isomers was employed.

UPE stands for unsaturated polyester.

## EXPERIMENTAL

### Synthesis of Polyurethane Low Profile Additives (PULPAs)

The desired amounts of styrene, p-benzoquinone, polyol, and low molecular weight diol chain extender were charged into a reaction flask which was then equipped with a heating mantle, stirring means, and means for introducing dry air or nitrogen. The reactants were blanketed with dry air, nitrogen, or mixtures thereof, the temperature was established at 60°C, the desired amount of TDI was added, taking care to prevent its contact with the skin of the operator, and then the reaction was allowed to proceed for 1.5 hours at 60°C, using a condenser if necessary to recondense volatilized material. The requisite amount of T-12 catalyst was then added and the reaction was allowed to continue for an additional 1 hour at 60°C. An aliquot of the mixture was taken and analyzed for free isocyanate and hydroxyl number. If the free isocyanate was greater than 0.1%, an additional 10% of catalyst was added and the reaction was continued for an additional 1 hour at 60°C. When the free isocyanate content was less than 0.1% a stoichiometric amount of capping anhydride, based on the hydroxyl number, was added. The reaction temperature was maintained at 60°C for a further two hour period, then an aliquot was taken and the acid number was determined. Heating was then discontinued and the reaction mixture was allowed to stir and cool overnight. The amounts of reagents used are shown in Table I below.

The materials of experiments 12 and 13 were prepared according to the following procedure, using the amounts of reagents shown in Table 1 below. A reaction flask equipped with a stirrer, thermometer and addition funnel was charged with a first polyester polyol (Rucoflex S-1011-35), a second polyester polyol (Rucoflex F-203) and approximately 70% of the styrene. The mixture was heated to 60°C, and the toluene diisocyanate was added, followed by the remainder of the styrene. The reaction was catalyzed by the addition of the catalyst. The resulting mixture was stirred at 75-80°C for 2 hours, at which point the maleic anhydride was added. The resulting mixture was stirred for 2 additional hours at 75-80°C.

## Table 1

### Reagents for Synthesis of Polyurethane Low Profile Additives-(PULPAs)[a]

| Sample No. | 1 | 2 | 3 | 4 | 5 | 6 | 7 |
|---|---|---|---|---|---|---|---|
| Styrene | 2472.4 | 4737.9 | 4718.3 | 1169.6 | 1878.5 | 1892.3 | 1895.5 |
| p-benzoquinone | 0.49 | 0.95 | 0.94 | 0.19 | 0.38 | 0.38 | 0.38 |
| Polyol A | — | 4120.1 | — | — | — | — | — |
| Polyol B | — | — | 4057.1 | — | — | — | — |
| Polyol C | 2130.4 | — | — | 667.5 | 1624.8 | 1796.6 | — |
| Polyol D | — | — | — | — | — | — | 1802.4 |
| Rucoflex S1011-35 | — | — | — | — | — | — | — |
| Rucoflex F 203 | — | — | — | — | — | — | — |
| 1,4-butanediol | 81.0 | 146.3 | 156.6 | 25.2 | 62.4 | — | — |
| 1,6-hexanediol | — | — | — | — | — | — | — |
| TDI | 261.0 | 471.5 | 504.6 | 87.0 | 191.4 | 95.7 | 93.1 |
| T-12 | 0.99 | 1.90 | 1.89 | 0.39 | 0.75 | 0.76 | 0.76 |
| Phthalic anhydride | 48.4 | 89.5 | 96.6 | 7.7 | 54.4 | 37.4 | 39.0 |

EP 0 553 495 B1

## Table 1 (Cont'd)

### Reagents for Synthesis of Polyurethane Low Profile Additives (PULPAs)[a]

| Sample No. | 8 | 9 | 10 | 11 | 12[b] | 13[c] | 14 |
|---|---|---|---|---|---|---|---|
| Styrene | 490.2 | 1947.0 | 1938.3 | 1912.4 | 2348 | 2337 | 927.8 |
| p-benzoquinone | 0.10 | 0.39 | 0.39 | 0.38 | | | 0.19 |
| Polyol A | — | — | — | — | | | — |
| Polyol B | — | — | — | — | | | — |
| Polyol C | — | — | — | 1656.3 | | | — |
| Polyol D | — | 1690.9 | — | — | | | — |
| Rucoflex S1011-35 | 375.0 | — | 1686.9 | — | 1436 | 857 | 465.5 |
| Rucoflex F 203 | — | — | — | — | 47.4 | 611.4 | 365.8 |
| 1,4-butanediol | — | 62.9 | 61.8 | 62.9 | | | 16.6 |
| 1,6-hexanediol | 42.2 | — | — | — | | | — |
| TDI | 73.1 | 193.1 | 189.7 | 193.1 | 74.5 | 78.6 | 80.0 |
| T-12 | 0.20 | 0.78 | 0.78 | 0.76 | | | 0.37 |
| Fomrez UL-1 | | | | | 7.8 | 7.8 | |
| Phthalic anhydride | 19.9 | 50.1 | 45.2 | — | | | 19.0 |
| Maleic anhydride | | | | | 7.4 | 11.0 | |

a)  Amounts in g unless otherwise specified

b)  European Patent Application 74746; Example 3

c)  European Patent Application 74746; Example 4

The exemplary polyurethane low profile additives were tested in a typical molding composition, the detailed makeup of which is shown below. Comparative compositions made with vinyl acetate-based low profile additive and the PULPAs of examples 12 and 13 instead of the PULPAs of the invention were prepared according to the formulation shown below with the exception that the PULPA was replaced by 40 pph of vinyl acetate-based low profile additive (as a 37% solution in styrene) and the supplemental 8 pph of styrene shown in the table below was not employed.

EP 0 553 495 B1

10

| Molding Composition Formula[a] | |
|---|---|
| Material | Amount |
| MR 13031 | 60 |
| PULPA (50% in styrene) | 32 |
| styrene | 8 |
| t-butyl perbenzoate | 1.5 |
| zinc stearate | 4 |
| CM-2015 (35% carbon black pigment) | 10 |
| Omyacarb 5 | 180 |
| PG-9033 | 1.8 |
| Fiberglass P-276, ½" | 15% by wt of total |

a) parts per hundred of resin, except as otherwise noted; resin is unsaturated polyester, styrene, and low profile additive.

General Procedure for Preparation of Bulk Molding Compound (BMC) Formulations

All the liquid components were weighed individually into a Hobart mixing pan placed on a balance. The pan was attached to a Model C-100 Hobart mixer located in a hood. The agitator was started at slow speed, then increased to maximum speed to completely mix the liquids over a period of 3-5 minutes. The agitator was then stopped and the internal mold release agent was next added to the liquid. The mixer was restarted and the mold release was mixed with the liquid until it was completely wet out. The filler was next added to the pan contents with the agitator off, then mixed using a medium to high speed until a consistent paste was obtained. The mixer was again stopped, a weighed amount of thickening agent was added, and then this was mixed into the paste using a slow to medium speed over a period of 2-3 minutes. The mixer was stopped again and about 175 grams of the paste were removed from the pan using a large spatula, and transferred to a wide-mouth 4 oz bottle. The bottle was capped, and the paste sample was stored in the capped bottle at room temperature and viscosity was measured periodically using a model HBT 5X Brookfield Synchro-Lectric Viscometer on a Helipath.

After removal of the paste sample, the composition was reweighed and styrene loss was made up, and chopped glass fibers were added slowly to the pan with the mixer running on slow speed. The mixer was then run for about 30 seconds after all the glass was in the paste. This short mixing time gave glass wet-out without degradation of the glass. The pan was then removed from the mixer and separate portions of the BMC mix of about 1200 grams each were removed using a spatula and were transferred to aluminum foil sheets lying on a balance pan. Each portion of the mix was tightly wrapped in the aluminum foil (to prevent loss of styrene via evaporation) and stored at room temperature until the viscosity of the retained paste sample reached an appropriate molding viscosity. The weight of the BMC added to the foil varies with the molding application.

Apparatus and Process for Preparation of Molding Test Panels

Flat panels for surface evaluation were molded on a 200 ton Lawton press containing a matched dye set of 18"x18" (45.7 x 45.7 cm) chrome plated molds. The female cavity is installed in the bottom and the male portion is at the top. Both molds are hot oil heated and are controlled so that they can be operated at different temperatures. For the present molding, the top and bottom temperatures were 295-305 °F (146 - 152°C), 1200g samples of molding compound were employed, and the molded part thickness was 0.120" (0.305 cm). The molding pressure, which can be varied from 0 to 1000 psi (0 - 6.89 MPa), was run at maximum pressure. The panels were laid on a flat surface, weighted to keep them flat, and allowed to cool overnight. The molded panels were measured with a vernier caliper to an accuracy of 0.001 inch (0.00254 cm) from corner to corner in all four directions to determine shrinkage, which is an average of the four readings. These panels were used for surface smoothness determinations.

Shrink Control Measurement

18"x18"x1/8" (45.7 x 45.7 x 0.3 cm) flat panels were molded in a highly polished chrome plated matched metal die mold in a 200 ton Lawton press, as described above. The exact dimensions of the four sides of this mold were measured accurately at room temperature, as discussed above. The exact lengths of the four sides of the flat molded panels were determined to the same degree of accuracy. These measurements were substituted into the equation below:

$$(b-a)/a = inch/inch\ shrinkage$$

where a = the sum of the lengths of the four sides of the mold, and b = the sum of the lengths of the four sides of the molded panels.

The shrink control measurement compares the perimeter of a cold panel to the perimeter of the cold mold. A reported positive number indicates an expansion and vice-versa for a reported negative number as compared to the cold mold. The units mil/inch indicate the amount of expansion (+) or contraction (-) in mils per inch of laminate (or panel perimeter).

Evaluation of Surface Smoothness

Surface quality measurements were performed on a Diffracto D-sight Audit Station-2 manufactured and sold by the Diffracto Co., Ltd. The surface waviness index (SWI) provided by this instrument is the standard deviation of the panel's surface with regard to long term waviness, as compared to the surface of a perfectly flat panel, whose long term waviness is zero. The smaller the SWI number, the smoother the panel.

Evaluation of Pigmentability

The pigmentability of the molding compositions was determined by evaluating the panels qualitatively and quantitatively for haze and mottling, then assigning pigmentation rating numbers. A pigmentation rating number of 1 means there was no pigment mottling present on the panel and the panel has a maximum depth of color. A pigmentation rating of 3 means there was no mottling present on the panel and the color depth was good, but lighter than panels having a rating number of 1. In such cases the pigment concentration can be used to achieve any color depth desired. With mottling and/or excessive hazing, this is difficult or impossible to accomplish by varying pigment concentration. A pigmentation rating of 4 means that though mottling is not a problem, there was a distinct hazing of the panel's pigmentation as compared to panels with a rating of 1 or 3, and therefore the panel is unacceptable. A rating of 5 means that both mottling and hazing are so severe as to be unacceptable. Ratings of 4 to 5 are the current state of the art for low shrinkage formulations.

The experimental molded panels were evaluated for surface quality, shrinkage control, and pigmentability. Results are shown in Table 2 below.

EP 0 553 495 B1

Table 2

<u>SURFACE QUALITY, SHRINKAGE CONTROL, AND PIGMENTABILITY OF MOLDED PARTS MADE
WITH MOLDING COMPOSITIONS EMPLOYING POLYURETHANE-BASED LOW PROFILE ADDITIVES</u>

| Sample No. | Description of Low Profile Additive | Surface Quality: SWI | Shrinkage Control: mil/in (mm/cm) | Pigmentation: Comment and Rating No. [a] |
|---|---|---|---|---|
| Control A | LP-40A | 301 | -0.319(-0.00319) | glossy surface, hazy, mottled 4.5 |
| Control B | Neulon T+ | 133 | 0.111(0.00111) | glossy surface, hazy, mottled 5 |
| Control C | Polystyrene | — | -1.5(-0.015) | no mottling |
| Control D | Acrylic polymer | — | -0.6(-0.006) | hazy, mottled |
| 1 | TDI/Polyol C/ 1,4-butanediol/ phthalic anhydride. 9.75/79.75/6.25/4.25 weight % of polymer. | 298 | 0.083(0.00083) | glossy surface, no mottling 3 |
| 1A | Same as 1, except pilot plant scale preparation. | 482 | 0.069(0.00069) | no mottling 3 |
| 1B | Same as 1A, except made into SMC. | 145 | 0.175(0.00175) | no mottling 3 |
| 2 | Same as 1, except polyol consists of 20% caprolactone and 80% diethylene glycol/ adipate polyester. | 468 | -0.061(-0.00061) | no mottling 3 |
| 3 | Same as 1, except polyol consists of 80% caprolactone and 20% diethylene glycol/ adipate polyester. | 450 | -0.035(-0.00035) | no mottling 3 |

13

EP 0 553 495 B1

Table 2 (Cont'd)

| Sample No. | Description of Low Profile Additive | Surface Quality: SWI | Shrinkage Control mil/in (mm/cm) | Pigmentation: Comment and Rating No. [a] |
|---|---|---|---|---|
| 4 | High MW version of 1. (OH/TDI mole ratio = 1.03) | 544 | −0.453(−0.00453) | no mottling 2.5 |
| 5 | Low MW version of 1. (OH/TDI mole ratio = 1.15) | 411 | 0.041(0.00041) | no mottling 3.5 |
| 6 (Comp.) | TDI/Polyol C/ phthalic anhydride (no low MW diol) | 326 | −0.111(−0.00111) | mottling; hazy 4.5 |
| 7 (Comp.) | TDI/Polyol D/ phthalic anhydride (no low MW diol) | 192 | −0.222(−0.00222) | mottling, hazy 4.5 |
| Control B' | Neulon T+ | — | 0.000(0.00000) | mottling, very hazy 5 |
| 8 | TDI/Rucoflex S 1011-35/ 1,6-hexanediol/PA | 514 | −0.097(−0.00097) | no mottling 2.5 |
| 9 | TDI/Polyol D/ 1,4-butanediol/PA | 352 | −0.013(−0.00013) | no mottling 3.5 |
| 10 | TDI/Rucoflex 1011-35/1,4-butanediol/PA | 482 | −0.263(−0.00263) | no mottling 2.5 |
| 11 | TDI/Polyol C/ 1,4-butanediol (no carboxylation of LPA | — | −0.027(0.00027) | no mottling 2.5 |
| 12 (Comp.) | TDI/Rucoflex S 1011-35/Rucoflex F 203/MA (European Patent Application 74746, Example 3) | 370 | −0.208(−0 00208) | no mottling, hazy 4 |

14

Table 2 (Cont'd)

| Sample No. | Description of Low Profile Additive | Surface Quality: SWI | Shrinkage Control mil/in (mm/cm) | Pigmentation: Comment and Rating No. [a] |
|---|---|---|---|---|
| 13 (Comp) | TDI/Rucoflex S 1011-35/Rucoflex F 203/MA (European Patent Application 74746, Example 4) | 540 | -0.333(-0.00333) | no mottling, hazy 4 |
| 1A' | TDI/Polyol C/ 1,4-butanediol/PA 9.75/79.75/6.25/4.25 wt % of polymer (pilot plant) | 430 | 0.222(0.00222) | no mottling 3 |
| 1A (Comp) | same as 1A' but molding composition was unthickened | 586 | 0.486(0.00486) | mottled, very hazy 5 |
| 14 | TDI/Rucoflex S 1011-35/Rucoflex F 203/1,4-butanediol/PA | 530 | -0.400(-0.00400) | no mottling 2 |

a)   1 = excellent (no mottling, and maximum color depth)
     3 = good (no mottling, and less color depth than 1)
     5 = poor (mottling, and much lighter color depth than 1)

The results presented in Table 2 show that none of the state of the art low profile additives (controls A, B, and B') exhibited good pigmentability. The typical problems associated with poor pigmentability such as severe mottling and hazing were present in the molded laminates. When a first generation low profile additive such as 35% polystyrene solution in styrene (Control C) is substituted into the basic BMC formulation at 40 pph for the poly(vinyl acetate) low profile additives, good pigmentation with no mottling is obtained in the molded parts, but the shrinkage control is poor at 1.5 mils/inch (0.15 %). When a second generation low profile additive such as 40 pph of a 33% acrylic polymer solution in styrene (Control D, e.g., Q-701 from Ashland Chemical) is substituted for the PULPA and the extra styrene in the basic BMC formulation, poor pigmentation due to both mottling and hazing was found in the molded panels. Shrinkage control was 0.6-0.7 mil/inch (0.06 - 0.07 %).

By contrast, the chemically thickened polyurethane-based low profile additives (samples 1, 1A, 1A', 1B, 2-5, 8-11, and 14) produced molding compositions which exhibited good to very good pigmentability, with no mottling present and any slight haziness not being apparent but only affecting the color depth. In general, these compositions also exhibited excellent shrinkage control, with shrinkage values ranging from +0.222 to -0.453 mil/in (+ 0.022 to - 0.045 %) and averaging -0.065 mil/in (- 0.0065 %). Such a combination of shrinkage control and pigmentability is highly unusual and unique. Generally, molding conpositions which exhibit good shrinkage control show poor pigmentability, as shown by the compositions containing the state of the art low profile additive Neulon T+ (controls B and B').

Samples 2 and 3 show that pigmentation performance and shrinkage control are not affected when the caprolactone level in the polyol is changed.

Samples 4 and 5 indicate that pigmentability varies somewhat as a function of the molecular weight of the PULPA, the higher molecular weight PULPA affording better pigmentability than the lower molecular weight PULPA. However, the acid number of the high mw material was different from that of the lower mw material.

Samples 6, 7, 12, and 13 show that when the chain extender is absent from the PULPA, pigmentability of the molding composition containing it is poor. This is true regardless which polyol is used in the PULPA. The presence of chain extenders such as low molecular weight diols are necessary in PULPAs which are to be used in pigmentable molding compositions. Sample 8 indicates that it is immaterial which low mw diol chain extender is used in the PULPA.

The type of polyol employed in the synthesis of the PULPA apparently has a small effect on the ability of the PULPA to provide good pigmentability. The PULPAs of samples 8, 9, and 10 were made with different polyols and provided different degrees of pigmentability, although the pigmentability of all the compositions was satisfactory to very good.

The PULPA of sample 11, which possessed no carboxylation on its backbone, afforded very good pigmentability.

A comparison of samples 1A' and 1A'' shows that for good pigmentability, the molding compositions should be thickened. The unthickened sample 1A'' showed poor pigmentability, while the otherwise similar thickened material showed good pigmentability.

Finally, a comparison of samples 12, 13, and 14 shows that insertion of low mw diol chain extender into PULPAs which had provided only poor pigmentability produced modified PULPAs which afforded very good pigmentability. This demonstrates the importance of the chain extender in PULPAs for pigmented compositions.

In addition to the combination of excellent shrinkage control and pigmentability afforded by use in polyester-based molding compositions of polyurethane low profile additives containing low molecular weight chain extenders, a number of these polyurethanes, particularly those derived from caprolactone, provide unexpectedly superior flexibility in the resulting molded parts.

Unusual and unexpected improvements in molded composite flexibility can be obtained when certain of these polyurethane polymers are employed in thermosetting formulas as all or a portion of the low profile additive. The best example of this improvement is when the polyurethane polymer used is based on a polyol which is derived from the reaction of a lactone with a diacid and a diol. An example is the reaction of c-caprolactone with adipic acid and diethylene glycol under standard high temperature esterification conditions. Another approach is to react the lactone with the polyester polyol, also under typical esterification conditions. The incorporation of from 10-90% of the lactone by weight in the polyol is desirable, with 40-80% being preferable. Small portions of triols can also be included in the polyol synthesis. Suitable lactones are ε-caprolactone, γ-butyrolactone, and the like. Polyacids, diols, and triols are the same as identified above. As indicated above, various methods of introducing carboxyl groups into the polymer can be employed.

Generally, to obtain good low profile activity it has been necessary to use more reactive and rigid unsaturated polyester resins. This has made it difficult to make more flexible composites with good surfaces such as would be desired for certain automotive body panels, e.g., fenders. To overcome these deficiencies, very flexible unsaturated polyester resins have been paired with special low profile additives to yield acceptable surface smoothness. However, these very flexible resins are inherently less reactive and cure slower than the more rigid versions. An advantage of the use of the unique polymers of this invention as low profile additives to impart flexibility is that the more rigid, faster curing unsaturated polyester resins can be employed and the resulting composites are very flexible.

| Sheet Molding Compound (SMC) Formulation | |
| --- | --- |
| Material | Amount[a] |
| Unsaturated Polyester Resin | 55 |
| Low profile additive | 32 |
| Styrene | 13 |
| t-butyl perbenzoate | 1.0 |
| U.S. Peroxygen-245 | 0.3 |
| Union Carbide viscosity reducer VR-3 | 3.0 |
| Zinc stearate | 1.0 |
| $CaCO_3$ (5 micron particle size) | 200 |
| Thickener composition | 17.0 |
| Fiberglass, 1 inch | 28 wt % of total |

a) parts per hundred of resin, except as otherwise noted; resin is unsaturated polyester, styrene, and low profile additive.

General Procedure for Preparation of Sheet Molding Compound (SMC) Formulations

All the liquid components were weighed individually into a five gallon open top container on an appropriate balance. The contents of the container were then mixed in a hood with a high speed Cowles type dissolver. The agitator was started at a slow speed, then increased to maximum speed to completely mix the liquids over a period of 2-3 minutes. The mold release agent and viscosity reducer, if one is desired, was next added to the liquids and mixed until completely dispersed. The filler was next added gradually from a tared container until a consistent paste was obtained, and the contents were further mixed to a minimum temperature of 90°F (32°C). The thickener, if used, was next mixed into the paste over a period of 2-3 minutes, the mixer was stopped and about 175 grams of paste were removed from the container and transferred to a wide mouth 4 oz bottle. This paste sample was stored in the capped bottle at room temperature and its viscosity was measured periodically using a model HBT 5X Brookfield Synchro-Lectric Viscometer on a Helopath Stand. The remainder of the paste was next added to the doctor boxes on the SMC machine where it was further combined with fiber glass (about 1 inch [2.54 cm] fibers). The sheet molding compound (SMC) was then allowed to mature to molding viscosity and was then molded into the desired articles.

In the case of all of the polyurethane additives, the 50% solids solution was used as the low profile additive. In the case of the poly(vinyl acetate) low profile additive, 40 parts of Union Carbide's Neulon T+ and 5 parts of styrene were used. In all cases the polyester resin was one designed for high quality low profile formulation applications (Stypol 3941 from Freeman Chemical Co., Port Washington, WI was used). The resin contains approximately 35 weight percent of styrene. The amount of low profile additive includes the styrene monomer in which it is dissolved. The thickener composition was comprised of 25.0% Union Carbide LP-90, 0.7% of a black pigment dispersion PDI-1805, 20.0% of PG-9033 (15.% sytrene), and 39.3% of a 5 micron particle size calcium carbonate.

The apparatus and method for determining flexibility of molded SMC panels is described in the paper entitled "Vertical Body Panels: Class A Surface from Flexible Sheet Molding Compound" by K.E. Atkins, et al., 46th Annual Conference, Composites Institute, The Society of the Plastics Industry Session 16-D (1991). In this method 18 inch by 18 inch by 0.120 inch (45.7 x 45.7 x 0.3 cm) flat panels were compression molded from the standard SMC formulation using 1200 grams of SMC and cured at approximately 300 °F (149°C) for two minutes at 1000 psi (6.89 MPa) of pressure. The flexibility of the resulting panels were then determined as described in the above-cited article, by fixing one corner of the test panel in the testing apparatus, bending the panel in a direction away from a fixed reference point by pulling on the opposing corner in the required direction, and measuring the position of the moved corner relative to the fixed reference point, the measurement being made at the point at which initial cracking of the panel was heard. As the molded test panels are all of substantially the same dimensions, the displacement measurements of various panels give an indication of the flexibility of the panels, the more flexible panels exhibiting higher numbers than less flexible panels. Flexibility test results for a number of molded panels are shown in the table below.

| Flexibility Testing of SMC Molded Panels | |
|---|---|
| Low Profile Additive | Panel Bend Distance |
| Poly(vinyl acetate) (Neulon-T+ From Union Carbide; comp.) | 46 cm |
| Polyurethane from polyol synthesized from a lactone (Sample No. 1) | 70 cm |
| Polyurethane from polyol not synthesized from a lactone (Sample No. 10) | 51 cm |
| Polyurethane from polyol not synthesized from a lactone and not including chain extender (Sample No. 12; comp.) | 51 cm |

These data indicate that the panel incorporating the polyurethane low profile additive of sample no. 1 was substantially more flexible than panels made with a poly(vinyl acetate)-based low profile additive or other polyurethane low profile additives not based on a lactone.

**Claims**

1. A polyester-based molding composition comprising:

    (a) an unsaturated polyester:
    (b) an ethylenically unsaturated monomer which is copolymerizable with said unsaturated polyester;
    (c) a polyurethane low profile additive which comprises the reaction product of

        (i) a polyisocyanate;
        (ii) a polyol or polyol blend having an average functionality of 2 to 3 hydroxyl groups per molecule and an average molecular weight of at least 500; and
        (iii) a diol chain extender having a molecular weight of less than 500;

    (d) fiber reinforcement;
    (e) a chemical thickener;
    (f) a pigment; and
    (g) a polymerization catalyst.

2. A polyester-based molding composition of claim 1 wherein in said polyurethane low profile additive said polyol or polyol blend is a blend of polyols comprising a triol.

3. A polyester-based molding composition of claim 1 or 2 wherein in said polyurethane low profile additive said diol chain extender is selected from neopentyl glycol, butanediol isomers, hexanediol isomers, ethylene glycol, propylene glycol isomers, isomers of cyclohexane dimethanol, octanediol isomers, diethylene glycol, and dipropylene glycol.

4. A method of preparing thermoset polyester positions comprising:

(1) preparing a mixture comprising the below-listed ingredients:

(a) an unsaturated polyester:
(b) an ethylenically unsaturated monomer which is copolymerizable with said unsaturated polyester;
(c) a polyurethane low profile additive which comprises the reaction product of

(i) a polyisocyanate;
(ii) a polyol or polyol blend having an average functionality of 2 to 3 hydroxyl groups per molecule and an average molecular weight of at least 500; and
(iii) a diol chain extender having a molecular weight of less than about 500;

(d) fiber reinforcement;
(e) a chemical thickener; and
(g) a polymerization catalyst;

(2) forming the resulting mixture into a desired shape; and
(3) curing the formed mixture.

5. The method of claim 4 wherein in said polyurethane low profile additive said polyol or polyol blend is a blend of polyols comprising a triol.

6. The method of claim 4 or 5 wherein in said polyurethane low profile additive said diol chain extender is selected from neopentyl glycol, butanediol tanediol isomers, hexanediol isomers, ethylene glycol, propylene glycol isomers, isomers of cyclohexane dimethanol, octanediol isomers, diethylene glycol, and dipropylene glycol.

7. A pigmented thermoset article prepared according to the process of any of claims 4 to 6.

**Patentansprüche**

1. Formmasse auf Polyester-Basis, umfassend:

(a) einen ungesättigten Polyester;
(b) ein ethylenisch ungesättigtes Monomer, das mit dem ungesättigten Polyester copolymerisierbar ist;
(c) ein Polyurethan-Maßstabilitätsadditiv, welches umfaßt das Reaktionsprodukt von

(i) einem Polyisocyanat;
(ii) einem Polyol oder einer Polyol-Mischung mit einer durchschnittlichen Funktionalität von 2 bis 3 Hydroxylgruppen pro Molekül und einem durchschnittlichen Molekulargewicht von mindestens 500; und
(iii) einem Diol-Kettenverlängerer mit einem Molekulargewicht von weniger als 500;

(d) Faser-Verstärkung;
(e) ein chemisches Verdickungsmittel;
(f) ein Pigment; und
(g) einem Polymerisationskatalysator.

2. Formmasse auf Polyester-Basis nach Anspruch 1, in welcher in dem Polyurethan-Maßstabilitätsadditiv das Polyol oder die Polyol-Mischung eine Mischung von Polyolen, die ein Triol umfaßt, ist.

3. Formmasse auf Polyester-Basis nach Anspruch 1 oder 2, in welcher in dem Polyurethan-Maßstabilitätsadditiv der Diol-Kettenverlängerer ausgewählt ist aus Neopentylglycol, Butandiol-Isomeren, Hexandiol-Isomeren, Ethylengly-

col, Propylenglycol-Isomeren, Isomeren von Cyclohexandimethanol, Octandiol-Isomeren, Diethylenglycol und Dipropylenglycol.

**4.** Verfahren zur Herstellung von pigmentierten thermisch härtenden Polyester-Zusammensetzungen, umfassend:

(1) Herstellung einer Mischung, die die unten aufgeführten Komponenten umfaßt:

(a) einen ungesättigten Polyester;
(b) ein ethylenisch ungesättigtes Monomer, das mit dem ungesättigten Polyester copolymerisierbar ist;
(c) ein Polyurethan-Maßstabilitätsadditiv, welches umfaßt das Reaktionsprodukt von

(i) einem Polyisocyanat;
(ii) einem Polyol oder einer Polyol-Mischung mit einer durchschnittlichen Funktionalität von 2 bis 3 Hydroxylgruppen pro Molekül und einem durchschnittlichen Molekulargewicht von mindestens 500; und
(iii) einem Diol-Kettenverlängerer mit einem Molekulargewicht von weniger als 500;

(d) Faser-Verstärkung;
(e) ein chemisches Verdickungsmittel;
(f) ein Pigment; und
(g) einem Polymerisationskatalysator;

(2) Formen der resultierenden Mischung in eine gewünschte Gestalt; und
(3) Härten der geformten Mischung.

**5.** Verfahren nach Anspruch 4, in welchem in dem Polyurethan-Maßstabilitätsadditiv das Polyol oder die Polyol-Mischung eine Mischung von Polyolen, die ein Triol umfaßt, ist.

**6.** Verfahren nach Anspruch 4 oder 5, in welchem in dem Polyurethan-Maßstabilitätsadditiv der Diol-Kettenverlängerer ausgewählt ist aus Neopentylglyol, Butandiol-Isomeren, Hexandiol-Isomeren, Ethylenglycol, Propylenglycol-Isomeren, Isomeren von Cyclohexandimethanol, Octandiol-Isomeren, Diethylenglycol und Dipropylenglycol.

**7.** Pigmentierter thermisch härtender Gegenstand, hergestellt gemäß dem Verfahren nach irgendeinem der Ansprüche 4 bis 6.

**Revendications**

**1.** Composition à mouler à base de polyester, comprenant :

(a) un polyester insaturé ;
(b) un monomère à non-saturation éthylénique qui est copolymérisable avec ce polyester insaturé ;
(c) un additif à profil bas qui est un polyuréthanne comprenant le produit de réaction

(i) d'un polyisocyanate ;
(ii) d'un polyol ou d'un mélange de polyols ayant une fonctionnalité moyenne de 2 à 3 groupes hydroxyle par molécule et un poids moléculaire moyen d'au moins 500 ; et
(iii) un agent d'allongement de chaîne qui est un diol ayant un poids moléculaire inférieur à 500 ;

(d) une armature de fibres ;
(e) un agent épaissant chimique ;
(f) un pigment ; et
(g) un catalyseur de polymérisation.

**2.** Composition à mouler à base de polyester suivant la revendication 1, dans laquelle le polyol ou le mélange de polyols dans l'additif à profil bas formé d'un polyuréthanne, est un mélange de polyols comprenant un triol.

**3.** Composition à mouler à base de polyester suivant la revendication 1 ou 2, dans laquelle le diol d'allongement de chaîne dans l'additif à profil bas formé d'un polyuréthanne, est choisi entre le néopentylglycol, des isomères de butanediol, des isomères d'hexanediol, l'éthylèneglycol, des isomères de propylèneglycol, des isomères de cyclohexanediméthanol, des isomères d'octanediol, le diéthylèneglycol, et le dipropylèneglycol.

4.  Procédé de production de compositions pigmentées thermodurcies à base de polyester, comprenant :

(1) la préparation d'un mélange contenant les ingrédients énumérés ci-dessous :

(a) un polyester insaturé ;
(b) un monomère à non-saturation éthylénique qui est copolymérisable avec ce polyester insaturé ;
(c) un additif à profil bas qui est un polyuréthanne comprenant le produit de réaction

(i) d'un polyisocyanate ;
(ii) d'un polyol ou d'un mélange de polyols ayant une fonctionnalité moyenne de 2 à 3 groupes hydroxyle par molécule et un poids moléculaire moyen d'au moins 500 ; et
(iii) d'un agent d'allongement de chaîne qui est un diol ayant un poids moléculaire inférieur à environ 500 ;

(d) une armature de fibres ;
(e) un agent épaississant chimique ;
(f) un pigment ; et
(g) un catalyseur de polymérisation ;

(2) le façonnage du mélange résultant pour lui donner une forme désirée ; et
(3) le durcissement du mélange façonné.

5.  Procédé suivant la revendication 4, dans lequel le polyol ou le mélange de polyols dans l'additif à profil bas formé d'un polyuréthanne est un mélange de polyols comprenant un triol.

6.  Procédé suivant la revendication 4 ou 5, dans lequel le diol d'allongement de chaîne dans l'additif à profil bas formé d'un polyuréthanne est choisi entre le néopentylglycol, des isomères de butanediol, des isomères d'hexanediol, l'éthylèneglycol, des isomères de propropylèneglycol, les isomères de cyclohexanediméthanol, les isomères d'octanediol, le diéthylèneglycol et le dipropylèneglycol.

7.  Article pigmenté thermodurci obtenu conformément au procédé suivant l'une quelconque des revendications 4 à 6.